# EUROPEAN PATENT SPECIFICATION

(11) **EP 0 693 998 B1**
(45) Date of publication and mention of the grant of the patent: **04.12.1996**
(21) Application number: 92924062.0
(22) Date of filing: 06.10.1992
(51) Int. Cl.: B60L 5/10, B60L 5/02

(54) **COLLECTOR FOR TROLLEY BUS**
STROMABNEHMER FÜR OBERLEITUNGSBUS
COLLECTEUR POUR TROLLEYBUS

(30) Priority: 18.12.1991 SE 9103751
(43) Date of publication of application: 31.01.1996
(73) Proprietor: SIVERS RESEARCH AB, S-117 32 Stockholm (SE)
(72) Inventor: SIVERS, Carl, S-117 32 Stockholm (SE)
(86) International application number: SE9200697
(87) International publication number: WO9311960

(56) References cited:
- CH-A- 558 265
- CH-A- 596 011
- SE-B- 372 204
- US-A- 3 998 305
- US-A- 4 745 997
- US-A- 4 980 520

## Description

### OLD TECHNIQUES

Hitherto vehicles driven by electricity obtained from lines (trolley busses, other vehicles) are usually equipped with two arms, each with one sliding connector, to rest against each one wire. After a derailing the driver was forced to debark, and, by hand, with ropes attached to the ends of the arms, pull the arms down and aim the connectors until the wires again rest in their narrow and shallow groove. Such derailing have been common and have been time consuming and in urban traffic an obstacle to the traffic, even if the bus could move slowly with battery power. The interest for trolley busses has decreased or ceased.

The patent CH, 596 011 , discloses a current collector for a trolley bus in which the collector is provided with contacts indicating displacement of the collector. The collector is also provided with a turning means to correct the sideways displacement.

The invention defined in the claims following here differs from CH, 596 011 in that the detectors for movement in side and height of the line connectors are electronic detectors for indicating the voltage at the power line near to the sides of the voltage connectors. This is not as described in CH, 596 011 .

### NEW TECHNIQUES

This invention relates to current collectors and their connected components, which essentially eliminate these difficulties.

Alternate current is preferably used in a modem system for trolley busses. This facilitates the change of speed of reliable squirrel cage drive motors by means of frequency conversion and quick disconnection of load when needed. The distributed voltage can be high and the distance between the feeding transformers long. Further measuring and guiding tools for the collector are more simple. Batteries must always give spare power for signaling and should allow short movements.

### COLLECTORS

The current collector, (below called the "collector"), is a unit including two or more connectors, probably not more than four, mechanically built together but insulated from each other, with every second one connected to each terminal. It is attached to the upper end of a parallelogram, (below called the "carrier"), for example consisting of two rigid poles, preferably tubes, connected in the corners of the plane of the parallelogram to two shorter poles. The corners are connected pivoted in the plane. The collector itself is affixed with bearings onto the aft crossbar. The movement of the collector upwards can be limited by a stop to slightly below the ends of the carrier poles. Thus these, not the collector itself can reach the perpendicular carrying wires for the wire pair if the collector has come to the side of the pair. There is further a stop for the collector so far below the carrier ends that these can't touch the carrying lines if the collector is correctly positioned on the wire pair. The collector is equipped with a spring which presses it upwards hard enough, relative to the pressure upwards on the aft perpendicular pole of the carrier, to enable the collector to swing freely up or down between end stops during normal operation. By means of a suitable pressure from the collector on the wire pair a large sag can be tolerated and thus larger distances between the suspension points for the wire pair.

The perpendicular pole forward has bearings perpendicular to the length of the bus, either directly on the roof or on a guided sledge. Thus the collector is always perpendicular to the bus. The sledge is in normal service in an aft position. It can quickly be pulled forward one half to some meters to a forward position if the bus is situated where the collector is on a short line stretch without electrical connection, to give it power again. As an alternative to a sledge on guides the carrier itself can be shortened.

As the collector is freely hinged, with springs, not essentially influencing the carrier, the pair of lines are influenced largely by the low mass of the collector, not by the larger mass of the carrier.

There is a risk during a derailing that the carrier or the collector can be hurt or that they pull the wire pair down or that arcs hurt. The collector can entirely leave its pair of wires because of large changes of course or litter on the wires. In such a case it should not be damaged itself because it is caught by for example perpendicular carrying lines. Nor should it pull down the wire pair. This can be avoided mechanically by means of bent end parts on the collector or the parallelogram to push them down to a position where it doesn't pull the carrying lines down even if it is entirely fallen down in a full opening at the side of the wires.

The connectors of the collector are preferably equipped with exchangeable contact surfaces of ordinary contact material. In order to attenuate singing sounds from the lines they can have soft seats of rubber like material.

Today there are known techniques, like detectors for the position in side and height of the collector and its carrier, means for moving the carrier towards the side and in height and possibly a fairly simple industry computer. The traffic can then be made fast and with small disturbance to other traffic. The forward end of the carrier can be equipped with indicators for the height of the collector over the ground plane as defined by the four wheels. The indicator for height must probably only indicate three positions, when the carrier is on the roof of the vehicle, when well under the wire pair, and freely and spring-cushioned with the collector contacting the lines.

### THE FIRST STEP

A first step according to this invention in its most elementary form is an electrically driven vehicle where the carrier is equipped with detectors indicating the pressure from the collector sideways against the carrier caused by the pressure against the wire pair by the connectors on the collector. If an axial displacement of the collector by the bearings on the carrier of one or two or more cm is allowed the indication can be simple with known indicators which can be contacts or which can give continuous indication for varying side pressure against the lines. The indicator guides a motor at the forward end of the carrier on the roof of the vehicle to keep the carrier and thus the collector out to the side so far that the mean side pressure on the lines is a minimum. This further decreases the risk for derailing.

Direction of the side angle of the carrier allows that the collector can be kept out almost abeam of the vehicle, for example up to 45° or 60°. The driver must, as formerly after derailing or sometimes for change of bus line, get out from the bus and pull the collector down from the wrong position , aim it to the correct position below the lines and release them.

When the side pressure from the collector on the carrier is too great, for instance when the carrier can't come further out, the driver can be warned in time by an optical or acoustic signal to take action.

### THE SECOND STEP

A second step means fast pulling down of the collector after a derailing which has caused lack of power, or quick switching off of the power if an arc occurs to avoid damage on lines or collector.

A quick pulling down can be done by releasing a normally stretched spring, which afterwards is slowly stretched by means of a low power motor, or by a stronger electrical or for example hydraulic motor or piston. The driver must as formerly get out and make contact manually.

The fast pulling down is released when the collector during a predetermined time lacks power. Arcs are allowed only for the shortest time possible, preferably for less than one ac period, causing voltage to be disconnected electronically. This is suitably coordinated with the equipment for transforming the line voltage to a variable voltage and frequency for the drive motors. Arcs ensue from current breaking, and happen also when the connector leaves the pair of wires and enters any surface free from voltage, for example because of strong cover by ice and further when the collector leaves the wires because of some defect. If for some reason an non expected long-living arc should develop the flaming causes specific current variations of much higher frequency than the line frequency, further specific sounds develop. Both can be used as indicators that the electronic breaking shall be done.

When the carrier is at an angle in height of a few degrees to the roof of the vehicle, it can be programmed or mechanically guided to come down in the direction of the vehicle before going down to the roof.

### THE THIRD STEP

A third step is that for a normal start of travel or after a quick pulling down the collector finds the correct position below the pair of wires and is lifted to contact the wires. This avoids time waste and traffic jams which hitherto caused the interest for trolley busses to cease. The driver can while still sitting give signals about pulling down, positioning sideways and lifting, and also parking the collector on the roof of the vehicle. He can read the result on an indicating table or a computer monitor or both.

For this reason the aft end of the carrier is equipped with two detectors symmetrically situated at the ends of the collector, which indicate the electromagnetic field around the pair of wires. The carrier is guided by these detectors until the indicated field is equal on both. It is, during continued fine adjustment of the position, brought up to put the connectors of the collector each to its wire. In this case the driver must not debark and the stop can be short.

The indication of the field can be done by two capacitive detectors, one at each end of the collector or the carrier. They are preferably screened as to make the furthermost detector must screened off at a great distance from the pair of wires. Two detectors can guide the carrier trying to give both the same voltage, only or in combination with phase measurement. Inductive detectors can be used if the line in another point is loaded to carry current. The general level of interference can be so high that the detectors get no clear indication when the collector is far from the wires. In order that this shall not hamper the guiding the collector can sweep from one side to the other, well below the wires, until the detectors come near enough to the wires and take action.

If the vehicle for some reason has stopped where the collector can't get voltage but voltage can be expected some distance forward, the end of the carrier at the roof of the vehicle can be brought forward say one half to some meters, until voltage is obtained. The carrier is then brought back to its aft position again.

If the vehicle shall be parked outdoors at freeze cold snow weather the sledge can be pulled all the way forward with the collector higher than the roof, it is then lowered and put backwards into a cover with rubber soft doors.

Loss of voltage can be caused by ice on the lines. Light ice scrapers attached at each connector, maybe spring loaded upwards, can be put in operating position during the cold time of the year. Especially thick ice can be scraped if the roof end of the carrier is moved to and fro.

When the bus line is forked the collector can be pressed to the correct side by the driver or via the vehicle computer, this by the same means which as described before kept the side pressure on the wires zero as an average. The side pressure can then be limited to the pressure needed to guide the carrier. When the vehicle has arrived to the correct pair of wires the functions return to keep the collector as an average at the middle of the pair.

### THE FOURTH STEP

A fourth step makes possible automatic steering at a given distance along a pair of wires. The distance is given by the horizontal angle of the carrier to the vehicle. The angle is kept constant as the detectors at the bearings of the collector for the side pressure from the pair of wires influence the steering to give these indicators on an average the same indicated pressure, as described before. The angle is indicated by detectors at the forward end of the carrier. The angle can be given by the driver for the moment but can also be set by other factors.

### TRAFFIC

### THE FIFTH STEP

A fifth step is, on the country side with only few oncoming vehicles, to build one pair of wires only to save costs. The bus driver who is in the best position, for instance in a downhill slope, lowers and pulls in his collector over the surface of the bus, all by pressing a knob. After the passage he orders the collector to contact the wires again. The meeting bus can for safety give a radio signal, either as a reminder or as an order to automatics, to avoid damage when meeting at great speed. Both busses can of course lower and pull the collectors in.

As the carriers can be kept far out from the side of the vehicle, along a narrow road one pair of wires can be hung on reasonably short arms to be used by both traffic directions. The collectors can further be guided sideways by mechanical signals like the turning of the steering wheel, or by electrical signals, to cause them to be pushed towards the intended direction at bus line forks. The driver can have before him an indicating table which shows line directions and among other how to press the collector.

### FIGURES

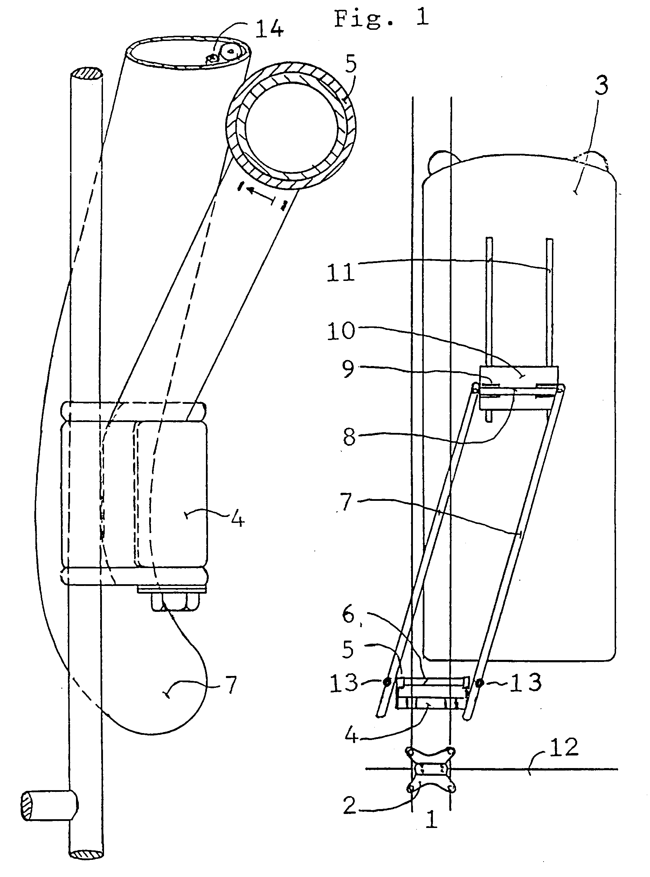

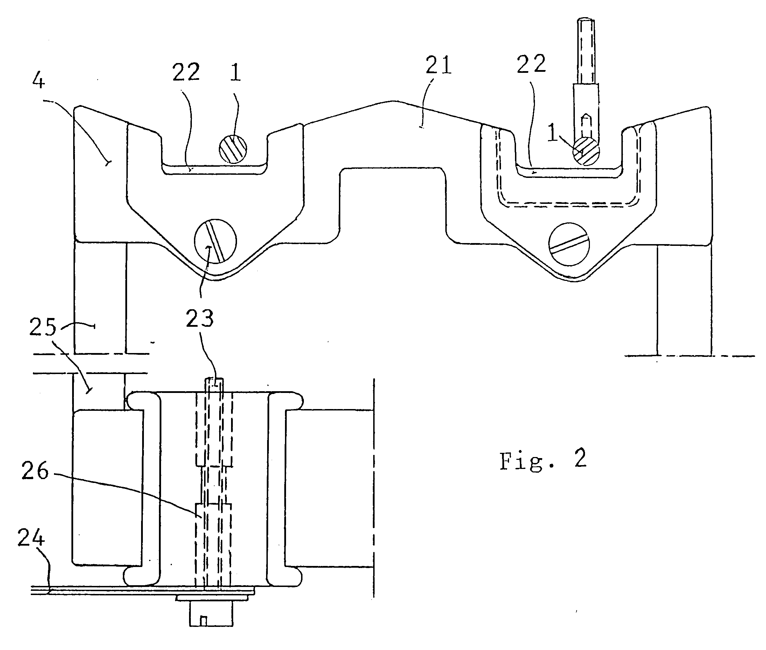

The trolley bus system will be described in connection with figures 1 and 2 :
Figure 1 shows a trolley bus from above and part of the collector with its attachment on the aft crossbar of the carrier.
Figure 2 shows a collector with two connectors.

### FIGURE 1

Figure 1 shows a pair of conducting wires 1 , means 2 for hanging this on a carrying line 12 , a vehicle 3 and a collector 4. The collector is hung with bearings on the upper perpendicular pole 6 of the carrier 7 formed as a parallelogram, which in turn is affixed to the lower perpendicular pole 8. This is mounted on bearings 9 perpendicular to the length of the bus, either directly on the roof of the bus or on a sledge 10 which can be moved to and fro up to some meter in the length direction of the bus on a guide 11.

The collector 4 can, because of the pressure against the pair of wires 1 , be moved vertically between two positions in relation to the softly bent upper ends of the carrier 7 . One position is just below the pole 6 , the other just below the upper side of the carrier 7 . It is pressed by a spring against the upper position. The carrier 7 in turn is pressed upwards by another spring in its lower end. The strengths of the springs are matched so, that in the case when the wires are in their standard height over the ground, the carrier can swing free between its end positions not to cause the double arm 7 to move considerably.

Because of some error the collector 4 may have lost the contact with the wires 1 leaving it without voltage. This causes electronically that the carrier 7 is pulled down automatically and quickly to a position below the wires 1 , not to hurt these or the carrying wires 12 nor to hurt itself. This is done by means of a motor or by a strong spring which is afterwards stretched by a small motor. When it is pulled down, the side position relative to the pair of wires 1 is felt electronically by indicators 13 on the outside of the upper ends of the carrier 7 . If the wires carry voltage the collector 4 is guided back below them and lifted to contact when the indicators 13 find the same field strength. The driver himself can switch the automatics for pulling down on and off. Means for moving the carrier upwards and sideways are in and at the sledge 10. Indicators for height and side of the collector are at its bearings 5 . Screened conductors 14 for power and indicators are suitably placed inside the length poles of the carrier. All results of measurements are processed in a computer. All the motors, indicators, the computer etc. are generally applications of known techniques.

### FIGURE 2

The wear surfaces of the connectors are suitably made slightly convex. The beam 21 is insulating and formed to be as light as possible, suitably made from glass reinforced polyester or corresponding. In order to allow high screw 23 pressures and thus low contact resistance to the conductors 24 it can be equipped with long nuts 26. The beam 21 has arms 25 fixed to the bearings 5 on the upper perpendicular arm 6 of the carrier 7. In order that the wire pair 1 shall easily glide into the groves there should be slanting top sides on the connector shoes 22.

## Claims

1. Collector for automatic and safe handling of the feed of power where the collector (4) has connecting shoes (22) mounted insulated on a beam (21) which is affixed in bearings (5) along the aft side (6) of a plane parallelogram (6,7,8) which is a carrier, the corners of which are jointed with rigid bearings perpendicular to the plane, the forward side (8) having bearings (9) transverse to the length of the vehicle, thus the aft end (6,4) can be guided out to both sides almost transverse to the vehicle and raised from a horizontal position up to the height of the pair of wires (1), with the collector always transverse to the length of the vehicle, with detectors to decrease the risk for derailing of the collector (4) from the pair of conductors (1) because of too great distance of the vehicle from the wires, **characterized in** that the carrier (7) is equipped with detectors at the bearings (5) of the collector (4) on the aft end (6) of the carrier, the detectors telling if the collector is pressing to the right or to the left by the bearings (5) and that the indication of the detectors guides a means for turning the collector to try to make the pressure of the lines sideways on the collector zero, as an average during a period of time prescribed, as indicated by the detectors on the carrier.

2. Collector according to the preceding claim **characterized in** that at its forward roof end the carrier is equipped with detectors for the side angle which, in combination with the detectors at the bearings (5) of the collector (4) for the side pressure from the pair of wires (1) on the collector make the vehicle move at a certain distance from the pair of wires, where the distance is given by the horizontal angle of the carrier to the vehicle, as settled by the driver or something else to be constant and to give automatic driving at a certain distance from the lines because the indication of the detectors for side pressure steers the vehicle, to be used by the driver as assistance's for driving and further to enable the driver to press the carrier to the correct side at forks and crossings.

3. Collector according to any one of the preceding claims, **characterized in** that the bearings (9) at the forward end of the carrier are attached on a sledge (10) which in normal use is in an aft position about in the middle of the roof of the vehicle but which can be pulled to a forward position on a guide (11) and that the sledge (10) then can be brought back to its aft position.

4. Collector according to any one of the preceding claims, **chacterized in** that if the collector at a stop has come out on a short part of the wire pair without voltage, the carrier is pulled forward on the guide to a position with voltage, the sledge then brought back to the normal position when the vehicle has passed the voltage less surface.

5. Collector according to any one of the preceding claims **characterized in** that the carrier is first pulled forward on the guide with the collector lifted above the roof, that the carrier then is lowered and the collector is pushed backwards through soft doors into a cover as the sledge is brought back to its normal position.

6. Collector for automatic and safe handling of the current feed, with collector according to any one of the preceding claim with means to avoid that the collector (4), carrier (6,7,8), wire pair (1) or carrying lines (12) are hurt in case that the collector has been pulled away from the pair of wires causing interruption of current, **characterized in** that its carrier (4) is quickly pulled down below the wires (1) by a prestretched spring or other means, lack of current during certain predetermined time being used as an indication for pulling down.

7. Collector (4) according to any one of the preceding claims, for automatic bringing back the collector to contact with the wires (1) **characterized in** that the aft ends of the carrier (7) near to and on each side of the collector has detectors (13) which feel the electrical field from the voltage on the wire pair (1) and that its forward end on the roof of the vehicle respectively on the sledge (10) has detectors telling the elevation of the carrier in at least three positions, about horizontally on the roof of the vehicle, in an angle as far up not to reach the wires and freely pushed up against the wires by means of a spring, and further that it has means which, guided sideways by the detectors and/or other signals turn the carrier until the detectors (13) indicate the same field from the pair of wires (1) and which then lift the carrier (7) until the connectors are in contact with the wires (1) again, the detectors and other means being known elements connected to a computer on the vehicle.

8. Collector according to any one of the preceding claims to avoid disturbing sounds because the connectors (22) drag on the wire pair (1) **characterized in** that soft material like rubber isn put between the connectors and the beam (21).

9. Collector according to any one of the preceding claims with means to avoid damage to the wires (1), contact shoes (22) and other parts which can be subjected to arcs because of interruption of voltage during load, for instance if the collector (4) goes out on a surface without voltage while the driving of the vehicle has not been stopped before, **characterized in** that the much higher frequencies than the mains frequency which develop during voltage interruption, and/or the specific sound from the arc, is used as an indicator to quickly break the current electronically after a set short time, suitably below one period of current.

10. Collector according to any one of the preceding claims when the loss of voltage is caused by especially hard layers of ice on the wires **characterized in** that light ice scrapers spring loaded upwards and possible to be drawn away, are mounted at the contact shoes and that the sledge as above when needed pulls the sledge to and fro, while the indicator of the side pressure keeps the carrier so far towards the wires that the field indicators indicate about the same field, not to risk that the collector derails.

11. Collector according to the preceding claim **characterized in** that ice scrapers are fixed mounted to somewhat before the contact shoes and with its upper edge below the surface of the contact shoes, but that the carrier is pressed so hard upwards when ice scraping is wanted that the collector is strongly turned down backwards to bring the scrapers against the ice.

## Patentansprüche

1. Stromabnehmer für automatische und sichere Handhabung der Stromzufuhr, wo der Stromabnehmer (4) Kontaktschuhe (22) hat, die isoliert auf einem Balken (21) montiert sind, der gelagert ist entlang der hinteren Seite (6)eines ebenen Parallelograms (6,7,8), das den Träger ausmacht, dessen Ecken mit im rechten Winkel gegen die Ebene steifen Lagern gefügt sind und dessen vordere Seite (8) in senkrechter Richtung mit Lager (9) im rechten Winkel gegen die Längsrichtung des Fahrzeugs (3) gelagert ist, wodurch das hintere Ende (6,4) nach beiden Seiten, nahezu quer zum Fahrzeug, herausgeführt werden und von horizontaler Lage zur Höhe des Leitungpaares (1) erhöht werden kann, mit dem Stromabnehmer (4) immer im rechten Winkel zur Längsrichtung des Fahrzeugs, mit detectors die das Risiko für Entgleisung des Stromabnehmers (4) vom Leitungspaar (1) wegen gar zu grossen Abstandes des Fahrzeugs zur Leitung vermindert und dadurch gekennzeichnet ist, dass der Träger beim Lager (5) des Stromabnehmers (4) von der hinteren Seite (6) des Trägers mit Gebern (13) versehen ist, die, wenn der Abnehmer links oder rechts im Lager (5) drückt, dies angeben und dass die Indikation der Geber ein Treibgerät für Herausdrehung des Abnehmers so steuert, dass der Leitungsdruck Null seitwärts am Abnehmer während eines gewissen vorausbestimmten Zeitabschnitts gesucht ist, der vom Geber des Trägers indikiert ist.

2. Stromabnehmer, nach dem vorigen Anspruch dadurch gekennzeichnet, dass der Träger bei seinem vorderen Dachende mit Gebers für den Seitennwinkel versehen ist, der in Kombination mit dem Geber beim Lager (5) des Abnehmers (4) für den Seitendruck vom Leiterpaar (1) auf den Abnehmer zusieht, dass das Fahrzeug sich an einem gewissen Abstand von dem Leiterpaar bewegt, wo der Abstand von dem horizontalen Winkel gegen das Fahrzeug gegeben ist, vom Führer oder etwas anderem bestimmt, konstant zu sein und automatische Steuerung an einem gewissen Abstand von dem Leiter dadurch zu geben, dass die Indikation des Seitendruckgebers das Fahrzeug steuert, vom Führer als Steuerhilfe zu verwenden, und weiter so, dass der Führer den Träger bei Streckentauschen und Kreuzungen zur richtigen Seite drücken kann.

3. Stromabnehmer, nach einem der vorstehenden Ansprüche dadurch gekennzeichnet, dass das Lager (9) im vorderen Ende des Trägers auf einem Schlitten (10) befestigt ist, der sich bei normalem Betrieb in einer hinteren Lage, ungefähr in der Mitte des Fahrzeugdaches befindet, aber auf einer Führung (11)ein Stück vorwärts gezogen und dann zur hinteren Lage zurückgeführt werden kann.

4. Stromabnehmer, nach einem der vorgehenden Ansprüche, da der Abnehmer, wenn das Fahrzeug anhält, zu einem kurzen spannungslosen Leitungsteil herausgekommen ist, dadurch gekennzeichnet, dass der Träger auf der Führung zu einer Lage mit Spannung hervorgezogen wird, damit das Fahrzeug verlorene Treibspannung wiederbekommt, wonach der Schlitten, wenn das Fahrzeug die Spannungslose Fläche passiert hat, zur Normallage zurückgeführt wird.

5. Stromabnehmer, nach einem der vorgehenden Ansprüche, für geschütztes Parken des Stromabnehmers, dadurch gekennzeichnet, dass der Träger zuerst auf der Führung, mit dem Abnehmer übers Dach angehoben, vorwärts gezogen wird, wonach der Träger versenkt wird und der Abnehmer nach hinten durch welche Türen in eine Hülle geschoben wird, dadurch, dass der Schlitten zur Normallage zurückgebracht wird.

6. Stromabnehmer für automatische und sichere Handhabung der Stromversorgung mit Stromabnehmer nach einer der vorgehenden Ansprüche mit einer Vorrichtung, um zu verhindern, dass der Abnehmer (4), der Träger (6,7,8) die Kontaktleitung (1) oder die Tragseile (12) beschädigt werden, falls der Abnehmer von dem Leiterpaar weggezogen ist, so dass Stromausfall entsteht, dadurch gekennzeichnet, dass sein Träger (4) von einer vorgespannten Feder oder einem anderen Gerät schnell unter die Leiter (1) heruntergezogen wird, wobei Stromausfall während gewisser vorausbestimmter längster Zeit als Indikation für die Herunterziehung verwendet wird.

7. Stromabnehmer nach einem der vorgehenden Ansprüche für automatisches Zurückbringen des Abnehmers (4) zum Kontakt mit dem Leitungspaar (1), dadurch gekennzeichnet,dass die hinteren Enden des Trägers (7) in der Nähe und auf beiden Seiten des Abnehmers Geber (13) haben, die das elektromagnetische Feld vom spannungsführenden Leitungspaar (1) abtasten und dass dessen vorderes Ende am Dach des Fahrzeugs respektive auf dem Schlitten (10) mit Gebern versehen ist, die die Elevation des Trägers in wenigstens drei Lagen angeben, ungefähr horizontal am Fahrzeugdach, in einem Winkel so weit herauf, dass er dennoch die Kontaktleitung nicht erreichen kann, sowie frei herauf gegen die Leitung, gezogen von einer Feder, sowie weiter dass er Treibgeräte hat, die,via den Gebern und/oder anderen Signalen gesteuert, den Träger drehen bis die Geber (13) dasselbe Feld von dem Leiterpaar (1) indikieren und dann den Träger (7) anheben bis der Abnehmer (4) wieder im Kontakt mit dem Leiterpaar (1) liegt, wobei die Geber und übrigen Geräte bekannte Elemente und zu einem Fahrzeugcomputer angeschlossen sind.

8. Stromabnehmer nach einer der vorgehenden Ansprüche, um störende Gerausche aufgrund des Schleifens der Kontaktschuhe (22) auf dem Leiterpaar (1) zu vermeiden, dadurch gekennzeichnet, dass geräuschdämpfendes weiches gummiähnliches Material zwischen Kontaktschuhen (22) und Balken (21) eingelegt ist.

9. Stromabnehmer nach einem der vorgehenden Ansprüche mit einer Vorrichtung, um Schäden auf Leitungen (1), Kontaktschuhen (22) und anderen Teilen, die aufgrund von Brechung des Stromverbrauchs für Lichtbogen ausgesetzt sein können, zu hindern, wenn z.B. der Abnehmer (4) auf eine spannungsfreie Fläche herausgeht, ohne dass die Treibfunktion des Fahrzeugs vorher aufgehört hat, dadurch gekennzeichnet, dass die viel höheren Frequenzen als die Netzfrequenz, die bei Stromunterbrechung entstehen, und/oder das spezifische Geräusch vom Lichtbogen als Indikator angewandt werden, um schnell elektronisch den Strom nach eingestellter kurzer Zeit, am besten während einer Stromperiode, zu brechen.

10. Stromabnehmer nach einer der vorgehenden Ansprüche, wenn der Verlust von Spannung durch speziell schwere Eisbelegungen auf den Leitungen verursacht ist, gekennzeichnet dadurch, dass leichte wegtragbare und herauffedernde Eiskratzer bei den Kontaktschuhen montiert sind und dass oben angegebener Schlitten bei Bedarf den Träger hin- und zurückzieht, während der Seitendruckgeber den Träger so weit gegen die Leitung heraushält, dass die Feldgeber ungefähr die gleichen Felder indikieren, um nicht zu riskieren, dass der Abnehmer entgleist.

11. Stromabnehmer nach den vorgehenden Ansprüchen, dadurch gekennzeichnet, dass die Eiskratzer etwas vor den Kontaktschuhen und mit ihrer oberen Kante unter der Fläche der Kontaktschuhe fest montiert sind, aber dass der Träger, wenn Eiskratzen erwünscht ist, so hart aufwärts gedrückt wird, dass der Abnehmer stark herunter und nach hinten gedreht wird, damit die Kratzer gegen das Eis kommen.

## Revendications

1. Trolley pour une alimentation électrique automatique et sûre, formé par un archet (4) équipé de semelles de contact (22) fixées sur isolant à une barre (21) montée par articulations pivotantes (5) sur le côté arrière (6) d'un parallélogramme situé dans un même plan (6,7,8) qui constitue la structure de support dont les angles sont assemblés par des articulations rigides perpendiculaires au plan du parallélogramme et dont le côté avant (8) est monté sur articulations (9) perpendiculairement au sens de la marche du véhicule, ce qui permet de déplacer l'élément arrière (6,4) des deux côtés, et de l'élever depuis sa position horizontale jusqu'à la ligne aérienne bifilaire (1), avec l'archet toujours perpendiculaire au véhicule, avec des détecteurs pour réduire le risque de déraillement de l'archet (4) sur les deux fils de contact (1) par suite d'une trop grande distance entre le véhicule et les fils, dispositif caractérisé par le fait que les perches (7) du support sont équipées de détecteurs (13) qui sont situés aux articulations (5) de l'archet de contact (4) sur le côté arrière (6) du support et qui indiquent si le trolley est pressé vers la droite ou vers la gauche dans ses articulations (5), et caractérisé par le fait que les indications des détecteurs commandent le déplacement latéral du trolley, de sorte que la pression latérale exercée sur le trolley par les fils de contact tendent vers zéro pendant une durée déterminée qui est donnée par les détecteurs du support.

2. Trolley selon la revendication précédente, caractérisé par le fait que le côté avant du support fixé sur le toit du véhicule est équipé de détecteurs d'angle de déplacement latéral qui, en combinaison avec les détecteurs qui sont situés aux articulations (5) de l'archet de contact (4) et qui enregistrent la pression latérale exercée sur l'archet par la ligne bifilaire (1), assurent que le véhicule se maintient à une certaine distance de la ligne, distance qui est donnée par l'angle horizontal entre les perches du support et le véhicule tel que déterminé par le conducteur ou d'une autre façon pour être constant et assurer automatiquement la conduite du véhicule à une distance donnée de la ligne du fait que le véhicule est guidé par les indications des détecteurs de pression latérale, système à utiliser par le conducteur comme dispositif auxiliaire de conduite et lui permettant aussi de presser les perches de support du bon côté dans les bifurcations et les croisements.

3. Trolley selon l'une des revendications précédentes, caractérisé par le fait que les articulations (9) à l'extrémité avant du support sont fixées à une semelle mobile (10) qui, en cas de marche normale, est située à l'arrière environ au milieu du toit du véhicule, mais peut être déplacée d'une certaine distance vers l'avant sur des glissières (11) et que la semelle mobile (10) peut ensuite être ramenée à sa position arrière.

4. Trolley selon l'une des revendications précédentes qui, lors d'un arrêt où l'archet se trouve dans une courte section de ligne sans tension, se caractérise par le fait que le support est déplacé vers l'avant sur les glissières jusqu'à une position où la tension est de nouveau présente, après quoi la semelle du support est ramenée à sa position normale quand le véhicule a passé la surface sans tension.

5. Trolley selon l'une des revendications précédentes, caractérisé par le fait que le support est d'abord déplacé vers l'avant sur les glissières avec le trolley levé sur le toit, après quoi le support est baissé et le trolley ramené en arrière dans un capot de protection par des portes souples quand la semelle est replacée dans sa position normale.

6. Trolley pour une alimentation électrique automatique et sûre, conçu selon l'une des revendications précédentes, avec dispositifs pour éviter les détériorations de l'archet (4), du support (6,7,8), des deux fils de contact (1) ou des câbles porteurs (12) dans le cas où le contact entre le trolley et les fils de contact est rompu et provoque une coupure de courant, caractérisé par le fait que l'archet (4) est rapidement abaissé sous les fils de contact (1) par un ressort prétendu ou autre dispositif, auquel cas l'absence de courant pendant un temps maximum prédéterminé est utilisé comme indication pour l'abaissement.

7. Trolley selon l'une des revendications précédentes pour rétablissement automatique du contact entre l'archet (4) et les deux fils de contact (1), caractérisé par le fait que l'extrémité arrière du support (7) à proximité et de chaque côté de l'archet est équipée de détecteurs (13) sensibles au champ électromagnétique de la ligne de contact bifilaire (1) et que son extrémité avant est équipée sur le toit du véhicule et sur la semelle mobile (10) de détecteurs qui donnent l'élévation du support avec au moins trois indications de position, à savoir presque horizontal sur le toit du véhicule, incliné au maximum avant le contact avec la ligne et enfin librement en contact avec la ligne sous l'action d'un ressort, et qui, de plus, est équipé d'un dispositif qui, guidé latéralement par les détecteurs et/ou d'autres signaux, fait tourner le support jusqu'à ce que les détecteurs (13) indiquent le même champ pour les deux fils de contact et soulèvent ensuite les perches du support (7) pour rétablir le contact entre l'archet (4) et les deux fils de contact (1), les détecteurs et autres pièces étant des éléments connus et connectés à un ordinateur du véhicule.

8. Trolley selon l'une des revendications précédentes pour éviter les bruits dérangeants provoqués par le frottement des semelles de contact (22) contre la ligne bifilaire (1), caractérisé par le fait qu'un isolant acoustique souple du type caoutchouc est placé entre les semelles de contact (22) et la barre (21).

9. Trolley selon l'une des revendications précédentes avec dispositif pour éviter les détériorations des fils (1), des semelles de contact (22) et d'autres éléments qui peuvent être soumis à des arcs électriques par suite d'une perte de tension en cours de charge, par exemple quand l'archet de prise de courant (4) passe sur une surface sans tension sans arrêt préalable du moteur du véhicule, caractérisé par le fait que les fréquences bien plus élevées que la fréquence du secteur qui se développent en cas de coupure de courant et/ou le bruit spécifique de l'arc électrique sont utilisés comme indicateurs pour couper rapidement le courant par voie électronique après une courte durée prédéterminée, de préférence dans l'espace d'une même période de courant.

10. Trolley selon l'une des revendications précédentes qui, lors de pertes de tension causées par la formation d'une couche de glace particulièrement résistante sur les fils de contact, est caractérisée par le fait que des petits racloirs à glace légers et amovibles sont montés sur ressort près des semelles de contact, et que la semelle mobile (10) décrite plus haut permet, en cas de besoin, d'avancer et de reculer le support, tandis que les détecteurs de pression latérale maintiennent le support contre la ligne jusqu'au point où les indicateurs de champ indiquent environ le même champ pour ne pas risquer le déraillement de l'archet.

11. Trolley selon les revendications précédentes, caractérisé par le fait que des racloirs à glace sont fixés un peu devant les semelles de contact avec l'arête supérieure située sous le plan des semelles de contact, mais que le support, en cas de décapage de glace, est pressé vers le haut tellement fort que l'archet de contact est fortement replié vers le bas et l'arrière de sorte que les racloirs arrivent au contact de la glace.
